# EUROPEAN PATENT APPLICATION

(11) **EP 3 854 738 A1**
(43) Date of publication of application: **28.07.2021**
(21) Application number: 20171845.9
(22) Date of filing: 28.04.2020
(51) Int. Cl.: B66B 1/34

(54) **ELEVATOR CAR COMMUNICATION SYSTEM**

(30) Priority: 24.01.2020 US 202016752152
(71) Applicant: Otis Elevator Company, Farmington, Connecticut 06032 (US)
(72) Inventor: MANICA, Luca, Trento, 38121 (IT); RIZANO, Tizar, Trento, 38121 (IT); ROCHETTO, Marco, Castel D'azzano, 37060 (IT); MARTINTONI, Davide, Trento, 38121 (IT); MANES, Enrico, East Hartford, CT 06108 (US)
(74) Representative: Dehns

(57) **Abstract**

An elevator system (2) comprises an elevator car (4a-d) that is moveable within a hoistway (6a-d). The elevator car (4a-d) comprises a first wireless communication unit (12a-d). A controller (8a-d) is arranged to communicate with the elevator car (4a-d), the controller (8a-d) comprising a second wireless communication unit (14a-d). The first and second wireless communication units (12a-d, 14a-d) are arranged to exchange elevator operational data using a wireless communication protocol. Each data symbol within a set of data symbols corresponding to the elevator operational data is modulated onto a plurality of orthogonal sub-carriers using an orthogonal frequency division multiplexing modulation scheme. The modulated plurality of orthogonal sub-carriers are transmitted between the first and second wireless communication units (12a-d, 14a-d) over a wireless interface (16a-d).

## Description

### Technical Field

This disclosure relates to an elevator car communication system, specifically a system that provides for wireless communication between an elevator car and a controller. The disclosure is particularly concerned with a system suitable for relatively long hoistways in which elevator cars may travel at relatively high velocity.

### Background Art

It is common in elevator systems to provide traveling cables that transmit safety and control signals (i.e. 'operational data') from the elevator car to the controller (which may be mounted within or at the top of the hoistway) and *vice versa.* However, while wired connections assure a reliable communication between the elevator boards, the installation and maintenance of such cables may be costly. Additionally, for specific buildings, cabled connections may be infeasible because the structure itself is not straight and thus does not allow for proper vertical cable sliding.

Given the issues with wired solutions, attempts have been made to provide for wireless communication between the elevator car and the controller. However, wireless communication in a hoistway faces new technical challenges when trying to assure the same reliability and safety level that may be obtained with a wired communication system.

Specifically, when the distance between the transmitter and the receiver is in the order of hundreds of meters, the received power of the received signals may be less than the working threshold (i.e. below a lower tolerance limit). Moreover, Doppler shift effects may negatively impact the signals between the elevator car and controller when the car moves at relatively high speeds. For example, in some installations, the elevator car may move at speeds of 12 m/s (i.e. 43 km/h) or higher, which may modify the communication frequency at the receiver. Finally, there may be a strong multipath effect due to a metallic environment (i.e. the hoistway itself) which may lead to 'deep fading'.

EP 3124418 A1 proposes a wireless data communication between the elevator control unit (ECU) and a service computer for elevator configuration and maintenance. US 7,134,530 B2 proposes a system in which a wireless link connects the ECU to terminals located in an elevator car and on each floor. WO 2002/059029 A considers wireless communication for providing infotainment in the elevator car. US 2006/0108181 A1 proposes exploiting modules that conform to Bluetooth® specification for transmitting wirelessly information related with floor call buttons, car door lock switches, safety switches and overspeed detectors. WO 2016/051012 A proposes an arrangement in which a directional antenna is used for transmitting data from the elevator car.

However, the approaches described in these documents may be improved upon. In particular, it has been appreciated that none of the prior art arrangements provide a communication system specifically designed for transmitting information between elevator controls units (e.g. located in the control room) and in the elevator car when the elevator works in normal operation mode.

### Summary of the Disclosure

In accordance with a first aspect, the present disclosure provides an elevator system comprising:
an elevator car moveable within a hoistway, said elevator car comprising a first wireless communication unit; and
a controller arranged to communicate with the elevator car, said controller comprising a second wireless communication unit;
wherein the first and second wireless communication units are arranged to exchange elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
wherein the modulated plurality of orthogonal sub-carriers are transmitted between the first and second wireless communication units over a wireless interface.

This first aspect of the disclosure extends to a wireless communication system for use in an elevator system comprising an elevator car moveable within a hoistway and a controller arranged to communicate with the elevator car, wherein the wireless communication system comprises:
a first wireless communication unit for use with the elevator car; and
a second wireless communication unit for use with the controller;
wherein the first and second wireless communication units are arranged to exchange elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
wherein the modulated plurality of orthogonal sub-carriers are transmitted between the first and second wireless communication units over a wireless interface.

The first aspect of the disclosure also extends to a method of operating an elevator system comprising an elevator car moveable within a hoistway and a controller arranged to communicate with the elevator car, wherein the method comprises:
providing a first wireless communication unit for use with the elevator car;
providing a second wireless communication unit for use with the controller;
exchanging elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
transmitting the modulated plurality of orthogonal sub-carriers between the first and second wireless communication units over a wireless interface.

The first aspect of the disclosure also extends to a non-transitory computer-readable medium comprising instructions that, when operated by a processor, cause the processor to carry out a method of operating an elevator system comprising an elevator car moveable within a hoistway and a controller arranged to communicate with the elevator car, wherein the method comprises:
providing a first wireless communication unit for use with the elevator car;
providing a second wireless communication unit for use with the controller;
exchanging elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
transmitting the modulated plurality of orthogonal sub-carriers between the first and second wireless communication units over a wireless interface.

Thus it will be appreciated that examples of the present disclosure provide an improved elevator system in which wireless communication between the elevator car and the controller is more robust against the Doppler shift and multipath effects than conventional approaches, known in the art *per se.* Specifically, the use of orthogonal frequency division multiplexing (OFDM) provides robustness against severe channel conditions, and helps to overcome issues arising from multipath effects. Those skilled in the art will appreciate that, with appropriate sub-carrier spacing, the wireless communication scheme described herein is robust against Doppler shifts arising from movement of the elevator car.

The data symbols used to modulate the orthogonal sub-carriers may belong to any suitable constellation, e.g. phase shift keying (PSK), quadrature phase shift keying (QPSK), quadrature amplitude modulation (QAM), etc. Spreading each data symbol over a plurality of sub-carriers also helps to overcome multipath effects. While the data symbols in the constellation could be transmitted using a single frequency, by the data symbols are instead spread over a greater bandwidth occupied by the sub-carriers (i.e. a greater bandwidth than would be required if the symbols were each transmitted using a single frequency).

The features of the wireless communication protocol are suitable for providing a communication network architecture that may advantageously not require the use of any repeaters (though these may still be used in some examples if required, e.g. due to an excessively long hoistway) and works with high-speed elevators.

Moreover, the protocol may be implemented by small modifications of commercial off-the-shelf (COTS) devices and subsequently installed on currently deployed elevator systems (i.e. it may be retrofitted).

Thus the wireless communication system described herein is particularly suitable for high speed elevators in long hoistways that would otherwise suffer from multipath and Doppler effects with conventional approaches.

The first wireless communication unit may be positioned on or within the elevator car in a position suitable for communication with the second wireless communication unit. In some examples, the first wireless communication unit is located on top of the elevator car.

In some examples, the second wireless communication unit is located within or proximate to the hoistway. In a set of such examples, the second wireless communication unit may be located at the top of the hoistway. For example, the second wireless communication unit may be located in a machine room at the top of the hoistway.

The elevator operational data exchanged between the elevator car and the controller may be unidirectional (i.e. flow only from the elevator car to the controller or *vice versa),* however in some examples the operational data exchanged between the elevator car and the controller is bidirectional (i.e. data flows to and from both the elevator car and the controller).

In some examples, the elevator car generates elevator operational data. This operational data may, for example, include elevator calls (such as destination floors), car occupancy (e.g. number of passengers or the current load mass), error messages, or status updates. In some examples the elevator car comprises a car board arranged to generate elevator operational data.

In some potentially overlapping examples, the controller generates elevator operational data. The elevator operational data generated by the controller may include elevator commands (such as to move to a specific floor, to stop, etc.), error messages, or status updates.

The elevator operational data may be carried on a controller area network (CAN) bus. The wireless communication units may, in some examples, each comprise a controller area network to wireless interface (or 'CAN2Wireless' interface). Such a CAN2Wireless interface may convert signals from the CAN bus to signals suitable for transmission across the wireless interface.

Depending on the installation, the elevator system may comprise only a single elevator car. However, in some examples, the elevator system comprises a plurality of elevator cars. In a set of potentially overlapping examples, the elevator system may comprise a plurality of hoistways. There may, for example, be one or more elevator cars dedicated to each hoistway, and/or elevator cars may move between the hoistways using techniques known in the art *per se.*

Each hoistway may, in some examples, be provided with a dedicated controller and an associated wireless communication unit. Where elevator cars move between hoistways, the wireless communication session with the elevator car may be 'handed over' from the controller of the originating hoistway to the controller of the destination hoistway, either directly or via one or more intermediate controllers in intermediate hoistways. When 'fast roaming' performance is desired (i.e. with a relatively fast handoff or handover between the source and the destination controller), a *priori* information about the position of the elevator car may be exploited. Specifically, when the elevator is in the proper position it may, in some examples, automatically send data to the destination controller.

While a single controller may be used in some examples, in other examples a plurality of controllers may be provided. There may, in a set of examples, be a dedicated controller for each of a plurality of elevator cars. There may be a one-to-one mapping of elevator cars and controllers such that each elevator car has a dedicated controller. Alternatively, each controller may communicate with a subset, or all, of the plurality of elevator cars, e.g. where the elevator cars are grouped such as by hoistway. In a set of such examples, the plurality of controllers may be connected to a group controller. This group controller may have a supervisory role, such that it has overall control of all of the elevator cars, and may direct communications between the controller(s) and elevator car(s) as appropriate.

In some examples, a transmitter within the first wireless communication unit and/or a transmitter within the second wireless communication unit has a transmission power of at least 20 dBm, preferably at least 25 dBm, and most preferably at least 27 dBm.

In some examples, a receiver within the first wireless communication unit and/or a receiver within the second wireless communication unit has a sensitivity of at least - 80 dBm, for example at least -81 dBm, and preferably has a sensitivity of at least -90 dBm.

There are a number of modulation schemes, known in the art *per se,* that may be used with the communication protocol disclosed herein. However, in some examples, the modulated sub-carriers carrying the elevator operational data are modulated using at least one modulation scheme from the group consisting of: binary phase-shift keying (BPSK); quadrature phase-shift keying (QPSK); 16-state quadrature amplitude modulation (16-QAM); and 64-state quadrature amplitude modulation (64-QAM).

The hoistway may be of a length suitable for the installation, i.e. the building that the elevator system is installed within. However, in some examples, the hoistway may have a length of at least 300 m, optionally of at least 400 m, further optionally of at least 500 m, yet further optionally of at least 800 m.

It has been appreciated that BPSK may be particularly advantageous when used with hoistways having a length of approximately 800 m while QPSK may be particularly advantageous when used with hoistways having a length of approximately 500 m. Additionally, 16-QAM may be advantageous for installations having a hoistway length of approximately 400 m, while 64-QAM may be advantageous for installations having a hoistway length of approximately 300 m.

As a Doppler shift generally leads to a shift in the signal at the receiver, a greater frequency distance between the sub-carriers improves resilience against the Doppler effects (i.e. due to the reduced overlap). However, a greater frequency distance means more occupied channel bandwidth, leading to a trade-off. In some examples, the modulated sub-carriers have a sub-carrier spacing upper bound of 156.25 kHz. In some examples, a minimal channel bandwidth (i.e. the minimal required bandwidth for transmitting the information between the elevator car and the controller) is between 1.0 MHz and 1.2 MHz.

In a multi-path environment, a delayed version of a data symbol may overlap with an adjacent data symbol. In order to overcome this, a guard-band may be introduced between two consecutive data symbols. The duration of the guard-band may depend on the delay spread of the channel (i.e. it measures how 'late' a replica of the data symbol will arrive at the receiver due the multi-path effect). As a general rule, with a higher delay spread (i.e. a greater multi-path effect), a longer guard interval is used. In some examples, the wireless communication protocol includes a guard interval duration of at least 1.6 µs. The IEEE 802.11p standard (referred to in further detail below) specifies the use of a 1.6 µs guard interval duration.

In some examples, the wireless communication protocol conforms to the IEEE 802.11p standard. The communication may, in some examples, implement only the PHY and the MAC layers of the IEEE 802.11p standard and not the other stack layers defined by the V2X communication. At network layer the nodes may use IPv4 for packet routing, though arrangements that use IPv6 are envisaged. Accordingly, in a set of examples, IEEE 802.11p compliant devices are placed on top of the elevator car and within the elevator hoistway. This standard is sometimes referred to as the 'wireless access in vehicular environments' (WAVE) standard.

In some examples, the modulated sub-carriers may be transmitted with a maximal communication frequency of between 4 GHz and 8 GHz, for example between 5 GHz and 7 GHz, and in some examples is 6 GHz.

The first and second wireless communication units will typically include an antenna. There may be a single antenna in each unit for transmission and reception, or there may be separate receiving and transmitting antennas in each wireless communication unit. These antennas will generally have an associated gain. In some examples, the antenna gain is at least 3 dBi, e.g. at least 4 dBi, and in preferable examples is at least 5 dBi. In general, a greater transmission gain is required where greater communication frequencies are used, in accordance with the Friis equation, known in the art *per se.*

### Brief Description of the Drawings

Certain examples of the present disclosure will now be described with reference to the accompanying drawings, in which:
Fig. 1 is a schematic drawing of an elevator system having a wireless communication system in accordance with an example of the present disclosure;
Fig. 2 is a schematic drawing of an alternative elevator system having a wireless communication system in accordance with a further example of the present disclosure; and
Fig. 3 is a schematic drawing of a further alternative elevator system in accordance with a further example of the present disclosure.

### Detailed Description

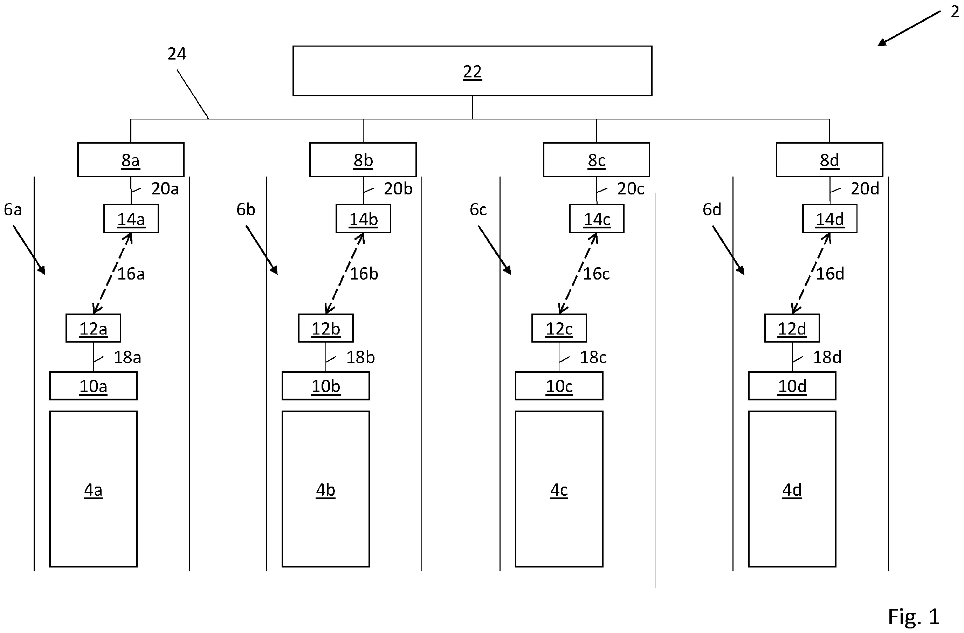

Fig. 1 is a schematic drawing of an elevator system 2 having a wireless communication system in accordance with an example of the present disclosure. In the elevator system 2 shown in Fig. 1, there are four elevator cars 4a-d arranged to move within respective hoistways 6a-d. At the top of each of the hoistways 6a-d is located a respective controller 8a-d.

Each elevator car 4a-d is provided with a respective car board 10a-d, which is arranged to supply and receive operational data relating to the corresponding elevator car 4a-d. This data may include the operational status of the elevator car 4a-d, any error messages, safety information, and control commands for driving operation of the elevator car 4a-d within the respective hoistway 6a-d. These car boards 10a-d may be single boards that perform all such functions, or there may be multiple 'sub' boards having functions divided amongst them, e.g. in practice the car boards 10a-d may each have a control board and a safety board. The car boards 10a-d may be positioned on the top of the respective elevator car 4a-d, or any other desired location on the respective elevator car 4a-d.

Each car board 10a-d is connected to a respective wireless communication unit 12a-d, which is arranged to communicate with a respective wireless communication unit 14a-d connected to the corresponding controller 8a-d over a wireless communication interface 16a-d using a wireless communication protocol. The wireless communication utilises OFDM modulation in which data symbols are spread across multiple orthogonal sub-carriers. As outlined in more detail below, the wireless communication protocol used in this particular example is compliant with the IEEE 802.11p standard.

The wireless communication units 12a-d, 14a-d each comprise a CAN2Wireless interface which converts signals on the wired CAN bus to signals for transmission across the wireless interface 16a-d, and *vice versa.* A CAN bus 18a-d connects the car-side wireless communication units 12a-d to the respective car boards 10a-d, while a further CAN bus 20a-d connects the controller side wireless communication units 14a-d to the respective controllers 8a-d. The conversion may be carried out by firmware or hardware as appropriate. It will, of course, be appreciated that the use of a CAN bus is merely exemplary, and other types of bus could be used as appropriate.

The wireless communication units 12a-d, 14a-d advantageously provide bidirectional communication across the wireless interface 16a-d and do not require line-of-sight.

The controllers 8a-d are connected to a group controller 22 via a group CAN bus 24. This group controller 22 centrally controls operation of each of the hoistway controllers 8a-d.

As outlined above, communication over the wireless communication interfaces 16a-d is carried out in accordance with the IEEE 802.11p protocol, which is a standard specified for vehicle-to-vehicle and vehicle-to-infrastructure communication (e.g. for use in autonomous vehicle applications).

The modulated sub-carriers transmitted over the wireless interface 16a-d have a sub-carrier spacing upper bound of 156.25 kHz, where the minimal channel bandwidth is between 1.0 MHz and 1.2 MHz.

Following the IEEE 802.11p standard using the modulation code scheme (MCS) 0, this involves the use of BPSK with a forward error correction FEC = ½. With this, the system can transmit 3 Mbit/s over a 10 MHz channel. Using OFDM modulation, there are 64 channels of 156.25 kHz width, i.e. a bandwidth of 64 x 156.25 kHz = 10 MHz, plus an additional band occupied by the remaining parts of the sub-carrier functions. The efficiency of this modulation is 0.3 bit/Hz.

When applied to the elevator system 2 of Fig. 1, the data stream to be transmitted may have a data rate of approximately 70 kbit/s. Using the modulation efficiency of 0.3 bit/Hz above, the required bandwidth is 70 kbit/s / 0.3 = 240 kHz. Adding a further 50% because the 240 kHz relates only to the payload leads to a total bandwidth of at least 360 kHz.

If a spacing between the sub-carrier is chosen to be equal to 156.25 kHz for transmitting the data, at least 3 data sub-carriers are needed, leading to 3 x 156.25 kHz = 468.75 kHz.

Moreover, in some arrangements, a number of pilot sub-carriers may be needed for correctly demodulating the received signals. In an arrangement with 4 pilot sub-carriers, the total channel bandwidth is (4 + 3) x 156.25 kHz = 1.0938 MHz.

Thus by applying a IEEE 802.11p 'like' communication, in which the bandwidth is reduced from the 10 MHz specified by the standard to 1.1 MHz as calculated above in light of the data throughput requirements (i.e. only 70 kbit/s rather than the 2 Mbit/s provided for by the standard). Thus, to provide a 1.1 MHz channel, the frequency spacing between the sub-carriers shall not exceed 156.25 kHz.

In an alternative system, the frequency spacing between sub-carriers may instead be 312.5 kHz with a bandwidth of 2 MHz.

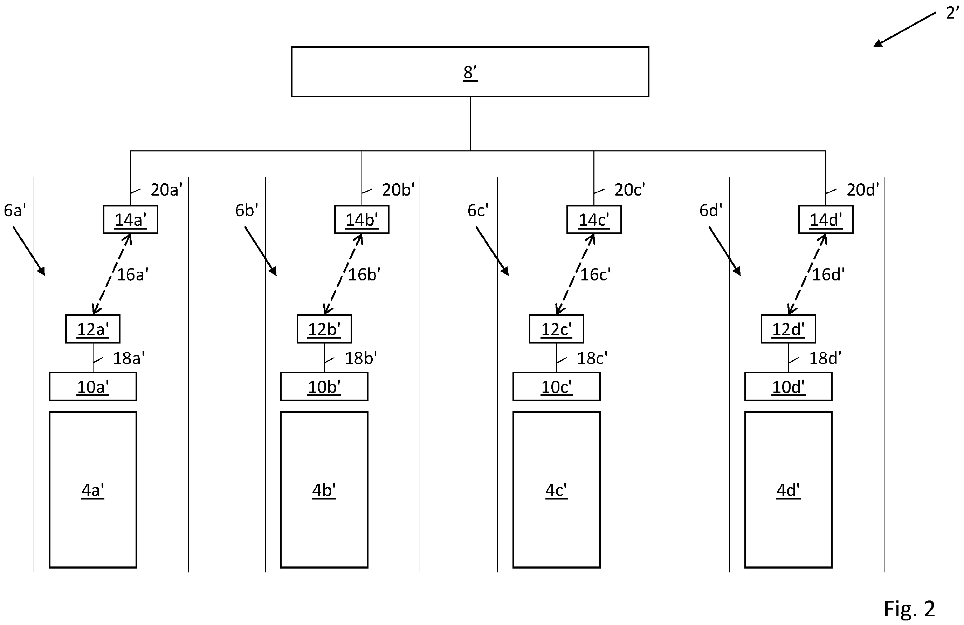

Fig. 2 is a schematic drawing of an alternative elevator system 2' having a wireless communication system in accordance with a further example of the present disclosure. Many of the components in the system 2' of Fig. 2 correspond in structure and function to those described with respect to the system 2 of Fig. 1, where like reference numerals indicate like components, appended with a prime symbol (').

The connections and functions of the components of this system 2' correspond to those described previously with reference to Fig. 1, except in that at the controller-side, there is now a single controller 8' which communicates with the elevator cars 4a'-d', where no group controller is provided. This controller 8' is connected to a number of wireless communication units 14a'-d', which ease communicate with a respective wireless communication unit 12a'-d' on the elevator cars 4a'-d'.

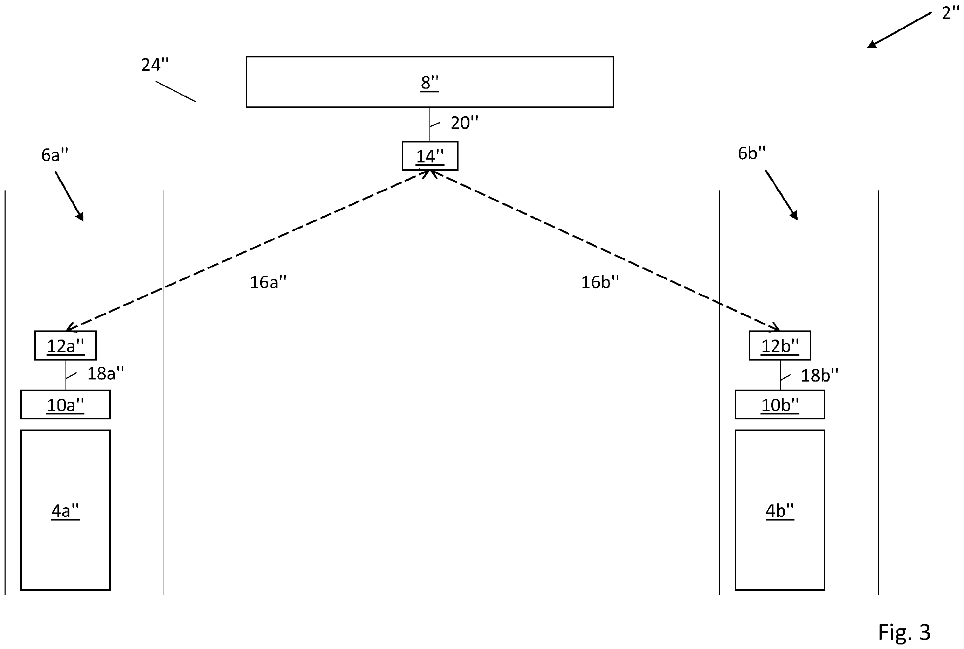

While separate wireless communication units 12a'-d' are provided for each hoistway 6a'-d' in the system 2' of Fig. 2, in other arrangements multiple elevator cars may communicate with the same controller-side wireless communication unit, as shown in Fig. 3.

Fig. 3 is a schematic drawing of a further alternative elevator system 2" in accordance with a further example of the present disclosure. As with the system 2' of Fig. 2, many of the components in the system 2" of Fig. 3 correspond in structure and function to those described previously, where like reference numerals indicate like components, appended with a double prime symbol (").

In the system 2" of Fig. 3, the wireless communication units 12a", 12b" on two of the elevator cars 4a", 4b" both communicate with the same controller-side wireless communication unit 14". Thus in this system 2", a single controller-side wireless communication unit 14" services multiple hoistways 6a", 6b", thereby advantageously reducing the amount of hardware required.

Thus it will be appreciated by those skilled in the art that examples of the present disclosure provide an improved elevator system with wireless communication between the elevator car and the controller that is robust against the Doppler shift and multipath effects when compared to conventional approaches, known in the art *per se.*

While specific examples of the disclosure have been described in detail, it will be appreciated by those skilled in the art that the examples described in detail are not limiting on the scope of the disclosure.

## Claims

1. An elevator system comprising:
an elevator car moveable within a hoistway, said elevator car comprising a first wireless communication unit; and
a controller arranged to communicate with the elevator car, said controller comprising a second wireless communication unit;
wherein the first and second wireless communication units are arranged to exchange elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
wherein the modulated plurality of orthogonal sub-carriers are transmitted between the first and second wireless communication units over a wireless interface.

2. The elevator system as claimed in claim 1, wherein the first wireless communication unit is located on top of the elevator car.

3. The elevator system as claimed in any preceding claim, wherein the second wireless communication unit is located within or proximate to the hoistway, optionally wherein the second wireless communication unit is located at the top of the hoistway.

4. The elevator system as claimed in any preceding claim, wherein the elevator car comprises a car board arranged to generate elevator operational data.

5. The elevator system as claimed in any preceding claim, wherein the controller generates elevator operational data.

6. The elevator system as claimed in any preceding claim, comprising a plurality of elevator cars and/or a plurality of hoistways.

7. The elevator system as claimed in any preceding claim, comprising a plurality of controllers, optionally wherein the plurality of controllers are connected to a group controller arranged to control said plurality of controllers.

8. The elevator system as claimed in any preceding claim, wherein:
a transmitter within the first wireless communication unit and/or a transmitter within the second wireless communication unit has a transmission power of at least 20 dBm, preferably at least 25 dBm, and most preferably at least 27 dBm; and/or
a receiver within the first wireless communication unit and/or a receiver within the second wireless communication unit has a sensitivity of at least -80 dBm, for example at least -81 dBm, and preferably has a sensitivity of at least -90 dBm.

9. The elevator system as claimed in any preceding claim, wherein the modulated sub-carriers carrying the elevator operational data are modulated using at least one modulation scheme from the group consisting of: binary phase-shift keying (BPSK); quadrature phase-shift keying (QPSK); 16-state quadrature amplitude modulation (16-QAM); and 64-state quadrature amplitude modulation (64-QAM).

10. The elevator system as claimed in any preceding claim, wherein the modulated sub-carriers have a sub-carrier spacing upper bound of 156.25 kHz, and/or wherein a minimal channel bandwidth is between 1.0 MHz and 1.2 MHz.

11. The elevator system as claimed in any preceding claim, wherein the wireless communication protocol includes a guard interval duration of at least 1.6 µs.

12. The elevator system as claimed in any preceding claim, wherein the wireless communication protocol conforms to the IEEE 802.11p standard, optionally wherein the wireless communication protocol implements only the PHY and the MAC layers of the IEEE 802.11p standard.

13. A wireless communication system for use in an elevator system comprising an elevator car moveable within a hoistway and a controller arranged to communicate with the elevator car, wherein the wireless communication system comprises:
a first wireless communication unit for use with the elevator car; and
a second wireless communication unit for use with the controller;
wherein the first and second wireless communication units are arranged to exchange elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
wherein the modulated plurality of orthogonal sub-carriers are transmitted between the first and second wireless communication units over a wireless interface.

14. A method of operating an elevator system comprising an elevator car moveable within a hoistway and a controller arranged to communicate with the elevator car, wherein the method comprises:
providing a first wireless communication unit for use with the elevator car;
providing a second wireless communication unit for use with the controller;
exchanging elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
transmitting the modulated plurality of orthogonal sub-carriers between the first and second wireless communication units over a wireless interface.

15. A non-transitory computer-readable medium comprising instructions that, when operated by a processor, cause the processor to carry out a method of operating an elevator system comprising an elevator car moveable within a hoistway and a controller arranged to communicate with the elevator car, wherein the method comprises:
providing a first wireless communication unit for use with the elevator car;
providing a second wireless communication unit for use with the controller;
exchanging elevator operational data using a wireless communication protocol, wherein each data symbol within a set of data symbols corresponding to said elevator operational data is modulated onto a plurality of orthogonal sub-carriers using an orthogonal frequency division multiplexing modulation scheme; and
transmitting the modulated plurality of orthogonal sub-carriers between the first and second wireless communication units over a wireless interface.
